# EUROPEAN PATENT SPECIFICATION

(11) **EP 0 989 422 B1**
(45) Date of publication and mention of the grant of the patent: **08.12.2010**
(21) Application number: 99307259.4
(22) Date of filing: 14.09.1999
(51) Int. Cl.: G02B 6/26, G02B 6/255, H04B 10/12, H04J 14/02, G02F 1/01

(54) **Tapered optical fiber devices with variable index coatings for modifying guide properties of the fundamental mode**
Vorrichtungen mit verjüngten Lichtleitfasern, mit Beschichtungen mit variabler Brechzahl zur Veränderung der Lichtleiteigenschaften der Grundmode
Dispositifs à fibres optiques effilées avec revêtements à indice de réfraction variable pour modifier les caractéristiques guidantes de la mode fondamentale

(30) Priority: 24.09.1998 US 159705
(43) Date of publication of application: 29.03.2000
(73) Proprietor: LUCENT TECHNOLOGIES INC., Murray Hill NJ 07974-0636 (US)
(72) Inventor: Espindola, Rolando Patricio, Chatham, New Jersey 07928 (US); Stentz, Andrew John, Clinton, New Jersey 08809 (US); Wagener, Jefferson Lynn, Aberdeen, Washington 98520 (US)
(74) Representative: Sarup, David Alexander

(56) References cited:
- EP-A- 0 862 291
- GB-A- 2 130 719
- PATENT ABSTRACTS OF JAPAN vol. 005, no. 185 (P-091), 25 November 1981 (1981-11-25) & JP 56 112621 A (TOSHIBA CORP), 5 September 1981 (1981-09-05)
- FAWCETT G ET AL: "IN-LINE FIBRE-OPTIC INTENSITY MODULATOR USING ELECTRO-OPTIC POLYMER" ELECTRONICS LETTERS, IEE STEVENAGE, GB, vol. 28, no. 11, 21 May 1992 (1992-05-21), pages 985-986, XP000305870 ISSN: 0013-5194
- CREANEY S ET AL: "CONTINUOUS-FIBER MODULATOR WITH HIGH-BANDWIDTH COPLANAR STRIP ELECTRODES" IEEE PHOTONICS TECHNOLOGY LETTERS, IEEE INC. NEW YORK, US, vol. 8, no. 3, 1 March 1996 (1996-03-01), pages 355-357, XP000582820 ISSN: 1041-1135

## Description

### Field Of The Invention

This invention relates to optical fiber devices and systems using them. In particular, it concerns tapered optical fiber devices with variable index coatings for modifying the guide properties of the fundamental mode.

### Background Of The Invention

Optical fibers are fundamental components in modern telecommunications systems and sensing systems. A typical optical fiber includes a core of a first index of refraction surrounded by a cladding of a second lower index of refraction. Optical fibers are typically made of high-purity silica with minor concentrations of dopants to control the index of refraction. Light rays impinging upon the core at an angle less than a critical acceptance angle undergo total internal reflection within the fiber core and pass through the fiber with minimum attenuation. This enables optical fibers to transmit optical signals containing a large amount of information over long distances with very low loss.

Designs for optical fibers vary depending upon the application, the desired mode of transmission of the light beam, and the materials used in fabrication. Some optical fiber designs use tapered fiber structures (e.g., fibers having a gradually decreasing outer diameter) for coupling fibers together and for making small fiber tips for probes or sensors. For example, tapered fibers for use in coupling are disclosed in U.S. Pat. No. 5,729,643, issued March 17, 1998 to Hmelar, et al.*,* "*Tapered Composite Optical Fiber and Method of Making the Same*"; U. S. Pat. No. 4,931,120, "*Method of Tapering End of Capillary Tube Bore for Optic Fiber Coupling,* and U.S. Pat. No. 4,671,609, "*Coupling Monomode Fiber Having a Tapered End Portion.*" Tapered fibers used as probes or sensors are disclosed in U.S. Pat. No. 5,430,813, issued July 4, 1995 to Anderson et al., "*Mode-matched, Combination Taper Fiber Optic Probe*,"; U.S. Pat. No. 5,703,979, "*Cylindrical Fiber Probe Devices,*" assigned to Lucent Technologies, Inc., the assignee herein; and U.S. Pat. No., 5,093,569, "*Tapered optical Fiber Sensor."*

Advancements in optical fiber systems, such as telecommunications systems, have created a need for other types of optical fiber designs, such as optical fiber-based modulators and attenuators. Unfortunately, existing designs are expensive and difficult to implement. Accordingly, there is a need for improved optical fiber-based modulators and attenuators and optical fiber systems which use them.

UK Patent Application No. 2,130,719 discloses a fiber-optic thermometer that has a light source, an optical fiber coupled with the light source and a core covered by a cladding, and a temperature sensor. The temperature sensor consists of a portion of the optical fiber where the cladding is replaced by a covering having a refractive index not less than that of the cladding over a given temperature measurement range and variable as a function of temperature. The end of the fiber that is remote from the light source is provided with a reflecting surface. The device provided has a relatively wide temperature measuring range, a relatively high sensitivity even when using only one fiber, can be miniaturized more easily, is insensitive to sensor position and has reliable operation even at low power.

An article entitled "In-Line Fibre-Optic Intensity Modulator Using Electro-Optic Polymer," published in Electronics Letters, No. 11, at pages 985-986, dated May 21, 1992 discusses a high performance in-line modulator wherein an improved performance and design is achieved by depositing an electro-optic polymer directly on the fiber half coupler. The device can be tuned to a specific wavelength of operation by varying the top electrode thickness. The effective index of the film mode can be changed by varying any one of the waveguide parameters of the film, such as thickness, refractive index or wavelength. The coupling conditions can be changed by applying an electric field to the active polymer layer and varying its refractive index.

An article entitled "Continuous-Fiber Modulator with High-Bandwidth Coplanar Strip Electrodes," published in IEEE Photonics Technology Letters, No. 3, pages 355-357, and dated March 9, 1996, discusses the operation of a continuous-fiber modulator based on coupling from a fiber side-published beyond cur-off to a multimode planar waveguide. The fiber includes a half-coupler that is polished to an extent that a region of the fiber coure is exposed. The guided optical field is cut off, and a multimode planar waveguide is then fabricated by an appropriate method on the polished surface, in contact with the exposed fiber core. The device further utilizes coplanar strip electrodes in a traveling-wave drice circuit to greatly improve the device bandwidth. Due to the low effective dielectric permittivity of the multiplayer modulator structure, the modulation signal velocity can be much closer to the light velocity than in similar integrated optic devices, resulting in reduced "walk-off."

European Patent Application No. 862,291 discloses a wavelength division multiplexing communication system comprising an optical amplifier having an output level control technique applicable to control an output level of an optical amplifier that serves as a repeater that can be controlled to obtain the best transmission performance. The control signals can be generated on different frequencies that are connected to light sources that emit light beams with non-overlapping wavelength bands. The light beams from the light sources are modulated in intensity by the control signals and can be further intensified with input data by optical modulators and optical multiplexers.

Japanese Patent Application No. 55015834 discloses a multimode optical detecting device for temperatures having a simple constitution by changing the diameter of an optical fiber at the intermediate position in a taper-like manner and by wrapping the outer periphery of the tapered part with a member whose refractive index changes in accordance with temperature when in a multimode, the refractive index of the member is less than the core and cladding and when in a monomode, the index of the cladding is between the index of refraction of the core and the member. Since the refractive index of the member changes according to temperature, the luminous energy passing a temperature detecting component changes according to temperature. Thus, by detecting this luminous energy, the temperature is measured.

### Summary Of The Invention

In accordance with the present invention, there is provided an optical fiber device as defined in appended claim 1.

### Brief Description Of The Drawings

The advantage nature and various additional features of the invention will appear more fully upon consideration of the illustrative embodiments now to be described in detail in connection with the accompanying drawings wherein:
FIG. 1 is a side-cross section of a fiber device;
FIG. 2 schematically illustrates a single-channel optical fiber communications system using a tapered fiber device as a modulator;
FIG. 3 schematically illustrates a multiwavelength optical fiber communications system using tapered fiber devices as modulators; and
FIG. 4 schematically illustrates a multiwavelength optical fiber communications system using tapered fiber devices as attenuators.

It is to be understood that these drawings are for purposes of illustrating the concepts of the invention and, except for graphical illustrations, are not to scale.

### Detailed Description Of The Invention

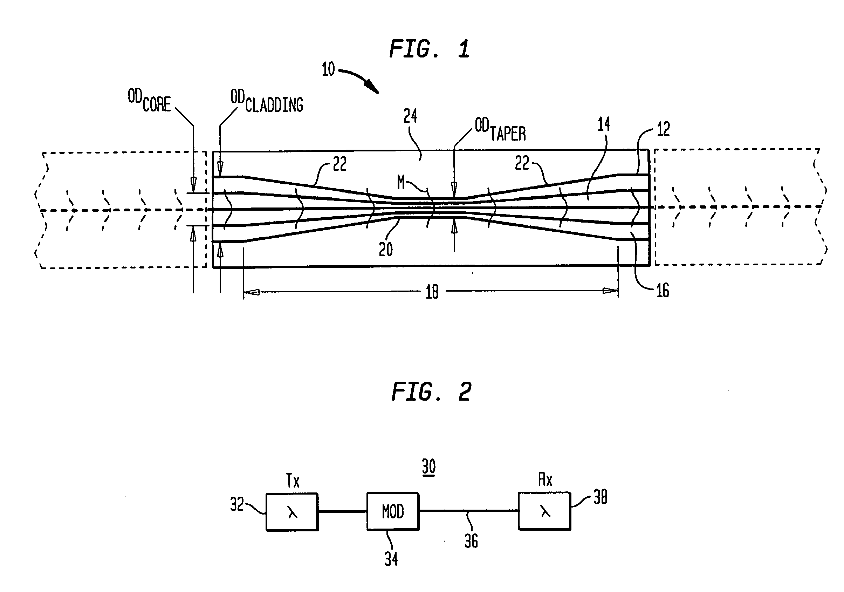

FIG. 1 is a side-cross section of a fiber device 10 which modifies the propagation behavior of the fundamental or core mode of light rays guided along its axis. The fiber device 10 comprises a cladded single mode stepped index or graded index optical fiber 12 having a circular inner core 14 surrounded by at least one cladding layer 16. The core 14 is of a relatively high index of refraction (stepped or graded) and the cladding 16 is of a slightly lower index of refraction as compared to the core 14. The core 14 is typically germanium-doped silica, and the cladding layer 16 is typically silica or fluorine-doped silica. The fiber 12 includes a tapered region 18 which includes a minimum outer diameter section 20 and two adiabatic tapered sections 22. The tapered region 18 is surrounded by a coating 24 of a variable refractive index material. Coatings of variable refractive index materials have indices of refraction which can be selectively varied by applying an electric field or a magnetic field to the coating. Coatings that are refractive index responsive to electric and magnetic fields typically comprise electro-optic or magneto-optic materials such as liquid crystals.

The tapered region 18 provides lossless operation and is appropriately sized to cause a non-negligible portion of the fundamental mode M to expand beyond or outside of the cladding 16 into the coating 24 surrounding the cladding 16 as light passes through the tapered region 18. This is due to the shrinking core diameter OD_{core} which results in weaker bounding of the fundamental mode, and therefore, an expansion of the fundamental mode field diameter. With the fundamental mode M extending outside the cladding 16, the coating 24 can be used for selectively changing the mode's propagation behavior. Depending upon the properties of the coating 24, the fiber device 10 can be advantageously used in optical fiber systems, such as optical fiber telecommunications systems, as a broadband optical signal modulator, a broadband optical signal attenuator, or a broadband optical signal variable attenuator.

The fiber device 10 can be used as an optical signal modulator or optical signal attenuator when the coating 24 consists of a variable refractive index material having an index of refraction (index) which can be selectively varied between an index that is below the index of the fiber cladding 16 and an index that is at or above the index of the fiber cladding 16. When the index of the coating 24 is adjusted below the index of the cladding 16 (provides a standard guide index for the fundamental mode), the fiber device 10 operates conventionally to guide rays along the axis of the fiber with minimum attentuation. When the index of the coating 24 is adjusted to or just above the index of the cladding 16, the fiber 10 operates as an attenuator because the fundamental mode M becomes radiative.

A fiber device similar to the device 10 shown in FIG. 1 can be made using a step index fiber with a 1% delta core index, a core OD_{core} of 5 microns and cladding OD_{cladding} of 125 microns. The fiber is placed under tension and heated with an oxyacetylene torch until the fiber begins to stretch. Translating the ends of the fiber at different rates so that the fiber moves through the flame of the torch creates the tapered region. Drawing process typically uses a rate of a about 1 centimeter/minute for one end of the fiber, and a starting translating rate of about 1 centimeter/minute for the second end of the fiber. The translation rate of the second end of the fiber is typically increased to about 39 centimeters/minute in a linear manner over about 6 seconds. This rate is maintained for about 3 seconds and then reduced to about 1 centimeters/minute over about 6 seconds. Such a drawing process produces a tapered region in the fiber having a minimum outer diameter section with a length of about 2 centimeters and an outer diameter ODₜₐₚₑᵣ of about 20 microns. The adiabatic tapered sections produce in the tapered region each have a length of about 1 centimeter. The completed tapered region is coated with a variable index coating selected to produce a desired propagation behavior in the fundamental mode.

FIG. 2 schematically illustrates a single-channel optical fiber communications system 30 using a tapered fiber device as a modulator. The system 30 comprises a transmitter 32 that produces optical signals at a wavelength λ, a tapered fiber modulator 34, a length of optical transmission fiber 36, and a receiver 38. The tapered fiber modulator 34 modulates the optical signals produced by the transmitter 32. It should be understood, the that tapered fiber device used in this system can also comprises an attenuator.

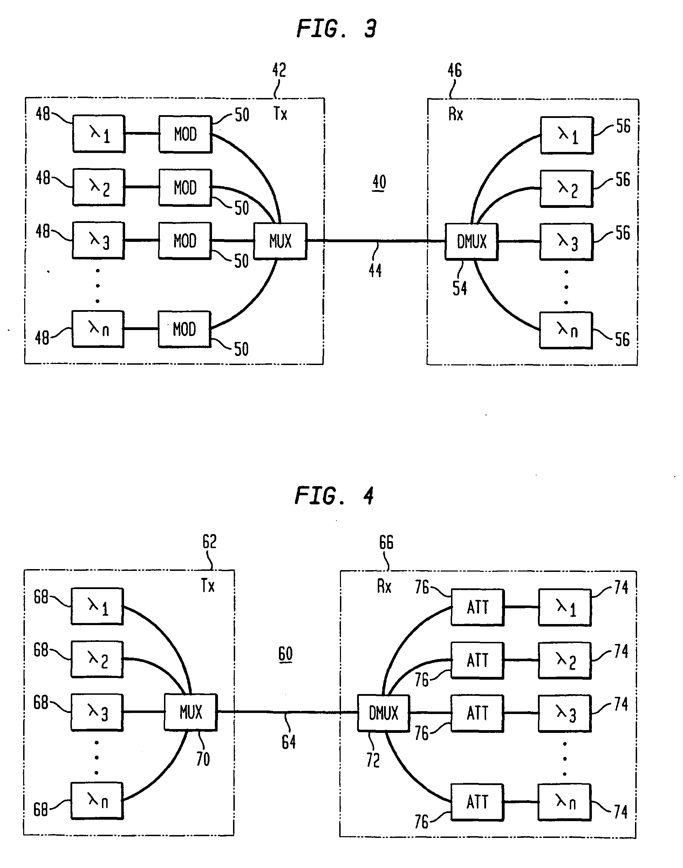

FIG. 3 schematically illustrates a multiwavelength optical fiber communications system 40 using tapered fiber devices as modulators. The system 40 comprises a transmitter 42, a length of optical transmission fiber 44, and a receiver 46. The transmitter 42 includes a plurality of sources 48 of optical signals at a respective plurality of wavelengths λ₁, λ₂, λ₃,...λₙ, a plurality of individually controlled tapered fiber modulators 50 for modulating the optical signals respectively produced by the optical signal sources 48 and a wavelength division multiplexer 52 for combining the modulated optical signals. The receiver 46 includes a wavelength division demultiplexer 54 for separating the optical signals and a plurality of optical receivers 56 for detecting the optical signals.

FIG. 4 schematically illustrates a multiwavelength optical fiber communications system 60 using tapered fiber devices as attenuators. The system 60 comprises a transmitter 62, a length of optical transmission fiber 64, and a receiver 66. The transmitter 62 includes a plurality of sources 68 of optical signals at a respective plurality of wavelengths λ₁, λ₂, λ₃,...λₙ and a wavelength division multiplexer 70 for combining the optical signals. The receiver 66 includes a wavelength division demultiplexer 72 for separating the optical signals, a plurality of optical receivers 74, and a plurality of individually controlled tapered fiber attenuators 76 for attenuating the opticals signals in order to equalize the power detected at each of the receivers 74.

While the foregoing invention has been described with reference to the above embodiments, various modifications and changes can be made without departing from the scope of the claims.

## Claims

1. An optical fiber device (10) comprising:
a length of optical fiber (12) for guiding light signals impinging at an end of the fiber (12);
a longitudinally tapered region (18) of the optical fiber (12) for causing a portion of the guided light signals to radiate from the tapered region (18) ; and
a coating (24) provided at the tapered region (18), said coating (24) consisting of a variable refractive index material having a refractive index that can be selectively varied by the application of at least one of an electric field and a magnetic field, wherein said coating (24) operates on the portion of light signals to change an amount of light radiating from the tapered region (18), and wherein a variation of the refractive index of the variable refractive index material leads to the change of the amount of light radiating from the tapered region (18),
**CHARACTERIZED IN THAT** the coating (24) surrounds the tapered region (18) of the optical fiber (12), and the tapered region (18) is formed by fusing and drawing the fiber (12).

2. The optical fiber device according to claim 1, wherein the refractive index may be selectively varied to cause the optical fiber (12) to function as a modulator or an attenuator.

3. The optical fiber device according to claim 1, wherein the fiber includes a core region (14) surrounded by at least one cladding region (16).

4. The optical fiber device according to claim 1, wherein the optical fiber (12) has a stepped index or a graded index.

## Patentansprüche

1. Eine Lichtleiterfaser-Vorrichtung (10), umfassend:
Eine Länge einer optischen Faser (12) zum Leiten von Lichtsignalen, welche an einem Ende der Faser (12) einfallen;
einen länglich verlaufenden verjüngten Bereich (18) der optischen Faser (12), welcher bewirkt, dass ein Abschnitt des geleiteten Lichtsignals aus dem verjüngten Bereich (18) abstrahlt ; und
eine im verjüngten Bereich (18) bereitgestellte Beschichtung (24), wobei die besagte Beschichtung (24) aus einem Material mit variabler Brechzahl besteht, wobei die Brechzahl selektiv durch die Anwendung mindestens entweder eines elektrischen Feldes oder eines magnetischen Feldes geändert werden kann, wobei die besagte Beschichtung (24) auf den Abschnitt der Lichtsignale einwirkt, um eine Menge von Licht, welches aus dem verjüngten Bereich (18) abstrahlt, zu verändern, und wobei eine Änderung der Brechzahl des Materials mit variabler Brechzahl zur Veränderung der Menge des von dem verjüngten Bereich (18) abstrahlenden Lichts führt,
**DADURCH GEKENNZEICHNET, DASS** die Beschichtung (24) den verjüngten Bereich (18) der optischen Faser (12) ummantelt, und dass der verjüngte Bereich (18) durch Schmelzen und Ziehen der Faser (12) gebildet wird.

2. Die Lichtleiterfaser-Vorrichtung nach Anspruch 1, wobei die Brechzahl selektiv geändert werden kann, um zu bewirken, dass die optische Faser (12) als ein Modulator oder ein Abschwächer fungiert.

3. Die Lichtleiterfaser-Vorrichtung nach Anspruch 1, wobei die Faser einen Kernbereich (14) umfasst, welcher von mindestens einem Umhüllungsbereich (16) ummantelt ist.

4. Die Lichtleiterfaser-Vorrichtung nach Anspruch 1, wobei die optische Faser (12) einen Stufenindex oder einen Gradientenindex aufweist.

## Revendications

1. Dispositif à fibre optique (10) comprenant :
une longueur de fibre optique (12) pour guider des signaux lumineux incidents à une extrémité de la fibre (12) ;
une région effilée longitudinalement (18) de la fibre optique (12) pour provoquer le rayonnement depuis la région effilée (18) d'une portion des signaux lumineux guidés,
un revêtement (24) appliqué sur la région effilée (18), ledit revêtement (24) se composant d'un matériau à indice de réfraction variable ayant un indice de réfraction qui peut être soumis à une variation sélective en appliquant au moins un champ électrique ou un champ magnétique, ledit revêtement (24) agissant sur la portion de signaux lumineux pour modifier une quantité de lumière qui rayonne depuis la région effilée (18) et une variation de l'indice de réfraction du matériau à indice de réfraction variable entraînant un changement de la quantité de lumière qui rayonne depuis la région effilée (18),
**CARACTERISE EN CE QUE** le revêtement (24) entoure la région effilée (18) de la fibre optique (12) et la région effilée (18) est formée par fusion et étirage de la fibre (12).

2. Dispositif à fibre optique selon la revendication 1, l'indice de réfraction pouvant être soumis à une variation sélective afin que la fibre optique (12) remplisse la fonction d'un modulateur ou d'un atténuateur.

3. Dispositif à fibre optique selon la revendication 1, la fibre incluant une région d'âme (14) entourée par au moins une région de gaine (16).

4. Dispositif à fibre optique selon la revendication 1, la fibre optique (12) ayant un indice échelonné ou un indice graduel.
